# EUROPEAN PATENT APPLICATION

(11) **EP 3 339 253 A1**
(43) Date of publication of application: **27.06.2018**
(21) Application number: 16205909.1
(22) Date of filing: 21.12.2016
(51) Int. Cl.: C02F 3/28, C02F 1/44, C02F 1/66

(54) **TREATMENT OF A FILTRATE FROM AN ANMBR USING REVERSE OSMOSIS OR NANOFILTRATION**

(71) Applicant: Veolia Water Solutions & Technologies Support, 94417 Saint-Maurice Cedex (FR)
(72) Inventor: HEFFERNAN, Barry, 2623 EW Delft (NL); FRANKLIN, Robertus Johannes, 2623 EW Delft (NL)
(74) Representative: V.O.

(57) **Abstract**

The invention relates to a method for the treatment of a filtrate (1a-1c) from an anaerobic membrane bioreactor (2), comprising
reducing the pH of the filtrate (1a) from the anaerobic membrane bioreactor and subjecting the filtrate having the reduced pH to a reverse osmosis treatment or a nanofiltration treatment (3), forming a reverse osmosis or nanofiltration permeate (4) and a reverse osmosis or nanofiltration concentrate (5)
whilst keeping the filtrate (1a-1c) from the anaerobic membrane bioreactor (2) essentially anaerobic.

The invention further relates to an installation suitable to carry out a method according to the invention and to a process for obtaining purified water and/or nutrients for plants or animals.

## Description

The invention relates to a method for the treatment of a filtrate from an anaerobic membrane bioreactor (AnMBR). The invention further relates to an installation, comprising a digester, a membrane filtration unit and a reverse osmosis unit or a nanofiltration unit for treating a fluid aqueous waste stream comprising a biodegradable organic substance.

Biological treatment of waste streams uses active biomass (microorganisms) to degrade biodegradable pollutants (biodegradable organic substances) in the waste stream, for instance a waste water stream.

For so-called anaerobic treatment (without oxygen) a consortia of anaerobic microorganisms, which are generally known in the art, convert pollutants in a bioreactor substantially to methane and carbon dioxide, which will form biogas. Under anaerobic conditions, the production biomass is generally relatively low, because typically only a small part of the biodegradable substance in the waste is used for biomass growth.

Suitably, the conversion of biodegradable organic substances is carried out in a bioreactor containing an aqueous suspension (mixed liquor) comprising biomass, un-reacted compounds from the waste stream and inorganic reaction products.

Such biomass, un-reacted solids and particulate inorganic reaction products may be separated from the fluid taken from the bioreactor by filtration, for instance by membrane filtration. Membranes can be used in combination with biological anaerobic treatment of waste streams to improve quality of the effluent from the waste water treatment process, avoid biomass washout, reduce plant footprint and increase organic load, Biological reactors coupled to a membrane separation unit are commonly referred to as membrane bioreactors (MBRs'). Such systems wherein the microorganism operate under essentially anaerobic conditions are called anaerobic membrane bioreactors (AnMBR's). In the membrane filtration unit a retentate, high in solids, and a filtrate (permeate) from the anaerobic membrane bioreactor is formed, which is low in solids. Said filtrate generally contains dissolved inorganics (such as inorganic cations, like calcium, magnesium, ammonium; inorganic anions, like phosphate, carbonate; carbon dioxide) and usually also contains residual dissolved organics. To remove these, a downstream post treatment is carried out, which typically comprises aerobic treatment processes.

In particular, there is a desire for alternative methodology for further purification of a filtrate from the membrane filter of an AnMBR, in particular methodology wherein the tendency of fouling and/or scaling is reduced, whereby treatment capacity of a filtrate (volume of filtrate that can be treated per period of time, e.g. per year) from an AnMBR is improved.

It is an object of the present invention to provide such an alternative method or installation, in particular a method or installation offering any of the advantages mentioned herein.

The inventors have realised that this is achieved by a using a specific type of treatment unit for removal of dissolved substances in the filtrate from the AnMBR, in combination with several specific measures.

Accordingly, the invention relates to a method for the treatment of a filtrate (1a-1c) from an anaerobic membrane bioreactor (2), comprising reducing the pH of the filtrate (1a) from the anaerobic membrane bioreactor and subjecting the filtrate having the reduced pH to a reverse osmosis treatment or a nanofiltration treatment (3), forming a reverse osmosis or nanofiltration permeate (4) and a reverse osmosis or nanofiltration concentrate (5) whilst keeping the filtrate (1a-1c) from the anaerobic membrane bioreactor (2) essentially anaerobic.

The invention further relates to an installation suitable for carrying out a method according to the invention. Such installation comprises an anaerobic membrane bioreactor (2), comprising a digester (9) and a membrane filtration unit (11) of which a filtrate outlet is connected to a reverse osmosis or nanofiltration unit (3) via a mixing unit (8) for introducing an acid, in particular carbon dioxide into the filtrate from membrane filtration unit (11), which reverse osmosis or nanofiltration unit has a reverse osmosis or nanofiltration permeate outlet (28) and a reverse osmosis or nanofiltration concentrate outlet(29). Further, (in an embodiment wherein the mixing unit is a mixing unit to introduce carbon dioxide produced in the installation into the filtrate) the installation typically comprises at least one of the following:
- a carbon dioxide recovery unit (7) for recovering carbon dioxide from said permeate, having an inlet (33) connected to said permeate outlet, which carbon dioxide recovery unit further has an outlet for a liquid (35), in particular water, from which carbon dioxide has been recovered and an outlet (34) for recovered carbon dioxide, which outlet (34) for recovered carbon dioxide is connected to inlet (25a) of the mixing unit (8) to introduce the carbon dioxide into the mixing unit (8));
- a carbon dioxide recovery unit (6) for recovering carbon dioxide from said concentrate, having an inlet (30) connected to said concentrate outlet (29), which carbon dioxide recovery unit (6) further has an concentrate outlet (32) for concentrate from which carbon dioxide has been recovered and an outlet (31) for recovered carbon dioxide, which outlet for recovered carbon dioxide is connected to inlet (25b) of the mixing unit (8) to introduce the carbon dioxide into the mixing unit (8));
- a carbon dioxide recovery unit (40) for recovering carbon dioxide from biogas produced in the digester (9), which carbon dioxide recovery unit (40) has an inlet (39) for introducing the biogas, an outlet (41) for biogas from which carbon dioxide has been recovered and an outlet (42) for recovered carbon dioxide, which outlet (42) for recovered biogas is connected to inlet (25c) of the mixing unit (8) to introduce the carbon dioxide in the mixing unit (8);
which installation is configured to maintain essentially anaerobic conditions in the digester, membrane filtration unit and the reverse osmosis or nanofiltration unit.

An installation or method according to the invention is particularly suitable to produce purified water and/or nutrients. Accordingly, the invention further relates to a process for obtaining purified water and/or nutrients for plants or animals, comprising the treatment of an aqueous waste stream comprising a biodegradable organic substance and inorganic matter in an installation according to the invention or comprising the treatment of an aqueous waste stream in an anaerobic membrane reactor from which a filtrate is obtained and which filtrate is treated in a method according to the invention.

Reverse osmosis (RO) and nanofiltration (NF), when used conventionally, is vulnerable to fouling or scaling.

Pores in the semi-permeable membranes used in RO or NF are small, making a relatively small amount of (organic) fouling or (inorganic) scaling already a substantial problem.

This is a reason why using RO or NF are not obvious choices for the treatment of an AnMBR filtrate. AnMBR systems tend to generate a filtrate with still a relatively high organic substance content (typically up to about 100 mg COD/l). Also, the substances present in an AnMBR filtrate can complicate the further treatment of the AnMBR filtrate with an RO or NF, as they may act as nutrients for microorganisms to grow and cause organic fouling in the RO or NF unit if RO or NF would be used to treat the filtrate from the AnMBR.

Further, in particular, inorganic ions may precipitate in the RO or UF unit, forming, e.g. a carbonate (CaCO₃) or struvite (MgNH₄PO₄.6H₂O). This can cause scaling. This can be more prominent due to changes in composition of the fluid streams feeding the RO or NF unit which can contribute to clogging of the pores in the RO or NF; in the reverse osmosis process part of the carbon dioxide will remain in the retentate and a part will pass through the RO or NF membrane into the permeate of the RO or NF. Hereby a pH increase may occur. The inventors realised that too high a pH causes precipitation of inorganic salts, such as struvite (at about pH 7.5 or higher), calcium phosphate or calcium carbonate. A pH of about 7.5 is also a pH at which many microorganism can grow well and thus organic fouling of the RO or NF membranes can occur.

The inventors realised it is possible to maintain the pH at an advantageously low value by reducing the pH of the filtrate to be fed to the RO or NF. In particular they realised this is possible by making use of carbon dioxide originating from the AnMBR, rather than avoiding an undesired pH-increase by adding an external acid to the feed for the RO or NF system. However, it is also possible to decrease the pH otherwise, in particular by adding another acid, which may be an organic acid, such as citric acid, or an inorganic acid, such as sulphamic acid (H₃NSO₃).

They further realised that making use of this pH reduction, in particular by using carbon dioxide originating from the AnMBR, in combination with maintaining essentially anaerobic conditions in the RO or NF, the system can be operated at a desired capacity for a pro-longed time, in particular because both scaling and fouling risks can be reduced. Further, this allows a reduction in the annual requirement of cleaning chemicals for the RO of NF unit. Thus, the invention provides a reduction in chemical usage. Regarding scaling, the inventors realised besides scaling due to precipitation of inorganic salts, sulphur scaling is a serious risk factor in conventionally used RO or NF units. Sulphur scaling is caused by oxidation of hydrogen sulphide (which may be present in a feed for the RO or NF unit, e.g. produced by a microorganism in the digester or downstream thereof). Such risk is at least substantially avoided, or at least reduced in accordance by the invention.

It is further an advantage that a method according to the invention can considerably reduce the consumption of anti-scaling agents to mitigate scaling. Relatively effective anti-scaling agents are known in the art for avoiding scaling by some salts, like calcium carbonate, but not for, e.g., calcium phosphate. Avoiding the need for (high amounts of) anti-scaling agents is also advantageous for further treatment of the permeate or concentrate, downstream of the RO or NF. In particular, if the concentrate is further subjected to a precipitation treatment, wherein a salt is precipitated, e.g. struvite, the presence of (a high concentration of) an anti-scaling agent makes the precipitation more difficult.

It is further an advantage that a method according to the invention is suitable to provide a RO or NF permeate that can be used as industrial or domestic water without further substantial purification treatment, or with only limited further purification treatment or disinfection.

The invention further allows a reduction in carbon dioxide gas emission, especially in an embodiment wherein carbon dioxide is (also) recovered as a carbonate from the RO or NF concentrate (which concentrate may also be referred to as 'brine').

Taking into account the effect(s) of a method according to the invention, the invention is in particular advantageous with respect to one or more of the following aspects: reduced overall-energy consumption, reducing fouling of the (membrane(s) of the) RO or NF unit, reducing scaling of the (membrane(s) of the) RO or NF unit, prolonging life time of the (membrane(s) of the) RO or NF unit, increasing availability of the installation wherein the treatment is carried out (time between to stops to clean or replace parts), increased flux over the RO or NF membrane, improved RO or NF performance, increased treatment capacity, increased purified water recovery capacity, increased treatment efficiency, reduced overall capital expenditure (Capex), reduced overall operational expenditure (Opex).
Figure 1 schematically shows a specific embodiment of the invention, with a carbon dioxide recovery unit to recover carbon dioxide from the concentrate of the RO or NF and/or a carbon dioxide recovery unit is present to recover carbon dioxide from the permeate of the RO or NF.
Figure 2 schematically shows a specific embodiment of the invention, wherein a carbon dioxide unit to recover carbon dioxide from biogas produced in the AnMBR.
Figure 3 schematically shows a more detailed view of a specific: a unit to recover carbon dioxide from the concentrate of the RO or NF, a carbon dioxide recovery unit to recover carbon dioxide from the permeate of the RO or NF and a carbon dioxide unit to recover carbon dioxide from biogas produced in the AnMBR.

The term "or" as used herein is defined as "and/or" unless specified otherwise.

The term "a" or "an" as used herein is defined as "at least one" unless specified otherwise.

When referring to a noun (*e.g.* a compound, an additive, *etc.*) in the singular, the plural is meant to be included.

The term "(at least) substantial(ly)" is generally used herein to indicate that it has the general character or function of that which is specified. When referring to a quantifiable feature, this term is in particular used to indicate that it is at least 50 %, more in particular more than 75 %, even more in particular more than 90 % of the maximum that feature. The term 'essentially free' is generally used herein to indicate that a substance is not present (below the detection limit achievable with analytical technology as available on the effective filing date) or present in such a low amount that it does not significantly affect the property of the product that is essentially free of said substance. In practice, in quantitative terms, a product is usually considered essentially free of a substance, if the content of the substance is 0- 0.1 wt.%, in particular 0 - 0.01 wt.%, more in particular 0 - 0.001 wt.%.

In the context of this application, the term "about" means generally a deviation of 15 % or less from the given value, in particular a deviation of 10% or less, more in particular a deviation of 5% or less.

As used herein "biodegradable organic substance" is organic substance that can be converted by biomass in the reactor under essentially anaerobic conditions, in particular into biomass or methane.

As used herein "organic substance' is any organic substance that is chemically oxidisable, as can be determined by the Chemical Oxygen Demand (COD) test, as described in ISO 6060:1989. A content of organic substance is generally expressed in g COD, *i*.*e*. grams oxygen that is consumed for the oxidation of the organic substance.

The term "pH"is used herein for the apparent pH, *i.e.* the pH as measured with a standard, calibrated pH electrode.

For the purpose of clarity and a concise description features are described herein as part of the same or separate embodiments, however, it will be appreciated that the scope of the invention may include embodiments having combinations of all or some of the features described. Terms used herein that are not specifically defined herein are as defined in WO 2013/139823, or - if not defined therein - used in accordance with common general knowledge.

The filtrate from the membrane bioreactor can in principle be a filtrate from any AnMBR, e.g. from an AnMBR (operated) as described in WO 2011/13092 A1, WO 2013/139823 or the prior art cited therein.

The waste stream treated in the AnMBR can in principle be any aqueous waste stream that comprises an organic substance that is biodegradable under anaerobic conditions. Preferably, the waste stream is selected from the group of municipal waste water streams, industrial waste water streams, sewage streams, aqueous waste streams from fermentation processes (such as residual fermentation broth), aqueous slurries and aqueous sludges. In terms of water content of a waste stream introduced into an anaerobic digester in a method according to the invention, this may vary in a wide range. Preferably, the water content is more than 50 wt. %, in particular at least 80 wt. %, more in particular 90 wt. % or more of the waste stream. The (organic) waste content may be 50 % or less, 20 % or less, 10 % or less or 2 % or less.

In a preferred embodiment, the waste stream is an industrial waste water, in particular from food or beverage production (e.g. dairy production, fruit processing) or waste water from a chemical plant or an agricultural waste water.

The filtrate to be subjected to RO or NF usually contains dissolved carbon dioxide (in particular as HCO₃⁻/CO₃²⁻) also before pH reduction. Carbon dioxide is typically formed in the AnMBR, and part thereof is dissolved in the liquid effluent of the digester, and as a consequence also in the filtrate.

A method according to the invention is in particular advantageous for the treatment of a filtrate originating from a waste stream containing a substantial amount of one or more compounds selected from the group of nitrogen-containing compounds, phosphorous containing compounds, calcium ions and magnesium ions or for the treatment of a filtrate wherein a substantial amount of one or more these compounds are used in the treatment of the waste stream, and wherein one or more of these compounds are present in or added to the filtrate. At least a substantial part of said nitrogen typically is part of ammonium. At least a substantial part of said phosphorous typically is part of a phosphate. Waste waters from food or beverage production or agricultural waste water are examples of waste waters which often contain relatively high amounts of ammonium, phosphate, calcium and/or magnesium.

In a preferred method of the invention, the filtrate to be subjected to RO or NF contains at least 20 ppm phosphate, in particular at least 50 ppm phosphate. In particular, the invention allows advantageous treatment of a filtrate in addition to the phosphate further comprising ammonium and magnesium. For such filtrate, the scaling by precipitation of struvite can be substantially avoided, or at least reduced compared to a reference method wherein RO or NF is carried out without the measures of the present invention. A filtrate comprising ammonium and phosphate that in particular benefits from a method of the invention has a molar ratio ammonium to phosphate of more than 1.0, preferably 1.5 or more, more preferably about 2.5 or more.

A method according to the invention is also useful to treat a filtrate from an AnMBR containing a substantial amount of calcium, such as at least 100 mg/l calcium, in particular 100-600 mg/l calcium. Due to the measures of the invention, it is possible to substantially avoid or at least reduce scaling by calcium carbonate precipitation.

The AnMBR from which the AnMBR filtrate to be treated by RO or NF is obtained can be operated in a manner known *per se.* Usually, the average total suspended solids content (TSS) in the digester is at least 5 g/l, in particular 8-60 g/l, more in particular 8-45 g/l, more in particular 10-35 g/l.

The digester (9) of the AnMBR, wherein biomass (anaerobic microorganisms) is used to degrade biodegradable organic substances, thereby forming biogas (comprising carbon dioxide and methane) preferably is a mixed reactor, in particular a continuous stirred tank reactor (CSTR).

Filtration of aqueous effluent of the digester is carried out in a filtration unit (11) which may situated inside the digester or outside the digester. The filtration unit is a membrane filtration unit, typically an ultrafiltration unit. In the membrane filtration unit a filtrate and a retentate are formed. At least a part of the filtrate is further treated in a method according to the invention.

It is important that the conditions in the RO or NF treatment are essentially anaerobic. Thereby (bio)fouling is reduced or avoided, but it can also have a positive effect in the reduction or avoiding of scaling. In principle, essentially anaerobic conditions can be accomplished in any manner. However, the inventors found an advantageous, non-complicated manner to accomplish this, namely by feeding the filtrate from the filtration membrane unit (11) to an AnMBR filtrate container (12), also serving as a feed container for the RO or NF (herein after also shortly referred to as 'filtrate container', such as a storage tank or other roofed vessel, having a head space (13) and providing a gas conduit (14) between said head space of the filtrate container and the head space (10) of the digester. Herewith, at least during use, the filtrate container and digester are communicating vessels. Biogas formed in the digester ensures an over-atmospheric pressure inside the digester, and - if in gas communication with the filtrate container, is effective in maintaining anaerobic conditions in the filtrate container, and further downstream at least till inside the RO or NF unit, or even thereafter.

Preferably, said gas conduit between the headspace of the digester and the headspace of the permeate container is provided with a foam trap (15). Foam is generally formed inside the digester. The inventors realised that the foam may contain substances that would adversely affect the RO or NF, if present in too high concentration. The presence of this foam trap, prevents contamination of the filtrate used for treatment by RO or NF by these substances. The skilled person will know how to provide the gas conduit with a foam trap.

The filtrate leaving the filtration membrane of the AnMBR may have about the same pH as the pH in the digester, which may be about neutral or slightly acid or alkaline, in particular a pH in the range of about 6.8 to about 7.8.

Before subjecting the permeate from the AnMBR to RO or NF, the filtrate is treated to reduce the pH. Usually, the pH of the filtrate subjected to RO or NF is adjusted to a value of about pH 7.0 or less, preferably about pH 6.7 or less, more preferably in particular about pH 6.5 or less. Usually, the pH is about 6.0 or higher, preferably pH 6.2 or higher, in particular pH 6.3 or higher, in particular in view of OPEX. In a particularly preferred embodiment, the pH of the filtrate subjected to RO or NF is in the range of 6.3 to 6.5.

The pH of the filtrate is preferably adjusted relatively shortly before the filtrate is subjected to RO or NF, i.e. - where applicable - downstream of the AnMBR filtrate container. This is in particular desired in case filtrate from the AnMBR is recycled into the digester. In such case, adding an acid to filtrate that is yet to be split in a recycle stream and a stream to be treated by RO or NF would be recycled to the digester, reducing the part used effectively for pH reduction and possibly reducing the relative content of methane in the biogas recovered from the AnMBR.

Further RO or NF conditions can be carried out based on conditions generally known in the art for obtaining purified water, see e.g. C. Fritzmann et al. l Desalination 216 (2007) 1-76*.*

During RO or NF, an RO or NF concentrate (brine) and an RO or NF permeate are formed. The concentrate is concentrated in inorganic salts, organics and may contain biomass. Further, if an acid has been used to reduce pH, as is preferred, it will usually contain a part of the acid, such as carbon dioxide, which was dissolved in the AnMBR filtrate to reduce pH. As a rule of thumb, the concentrate obtained by RO or NF contains up to about 30 wt.% of components other than water, preferably 25-35 wt.%.

The RO or NF concentrate may be further processed or discarded based on a manner known per se.

In an advantageous embodiment, the RO or NF concentrate is treated to recover carbon dioxide, which is used to adjust the pH of the filtrate to be treated by RO or NF. This can for instance be done using a membrane contactor or a vacuum degasser.

In a preferred embodiment, the RO or NF concentrate is subjected to a precipitation step, wherein a salt is precipitated. In particular, it is useful to prepare a salt precipitate comprising a phosphate salt and/or an ammonium salt or another nutrient that may e.g. be used for a fertilizer. Interesting metal cations, as nutrients, of which one or more may be present in a nutrient product, include potassium, calcium, magnesium and trace metals. Advantageously, precipitates comprising struvite, calcium phosphate and/or calcium carbonate may be formed. Precipitation can be done by adding an alkaline substance, such as an alkaline earth oxide (MgO, CaO) or hydroxide (CaOH, MgOH) or an alkali hydroxide, in particular KOH, which also have nutrient value. Advantageously, a supersaturator reactor is used. Herewith the use of an added alkaline substance can be avoided or substantially reduced. The precipitate may be subjected to further treatment, in particular dried. During drying a solid fraction (salt crystals) is recovered. A gas phase may be used (or formed) comprising NH₃, which can be recovered from the gas phase in a water absorber, wherein ammonium hydroxide is recovered. This can be used for fertilizer production or the like.

It is in particular preferred to combine the recovery of carbon dioxide from the RO or NF concentrate with a precipitation step to recover an inorganic salt. By recovery of the carbon dioxide, pH of the RO or NF concentrate is increased, whereby less or no alkaline substance is needed to accomplish precipitation and/or wherein less concentration of the RO or NF concentrate is required to accomplish precipitation.

In a preferred embodiment, carbon dioxide is recovered from the RO or NF permeate. Suitable equipment to recover the carbon dioxide advantageously is selected from the group consisting of vacuum strippers, gas strippers (such as a stripper making use of nitrogen to gasify carbon dioxide) and membrane contactors to remove carbon dioxide from the RO or NF concentrate .

Further, it is possible to recover carbon dioxide from biogas produced in the anaerobic digester and introduce the carbon dioxide in the AnMBR filtrate prior to its use as RO or NF feed. For recovery of carbon dioxide from biogas, a known technique may be use, such as a separation over a gas-selective membrane, which is either more permeable to carbon dioxide than to methane or more permeable to methane than to carbon dioxide. One may also subject the biogas to an oxidation step whereby carbon dioxide is formed and used the resultant gas for the pH adjustment.

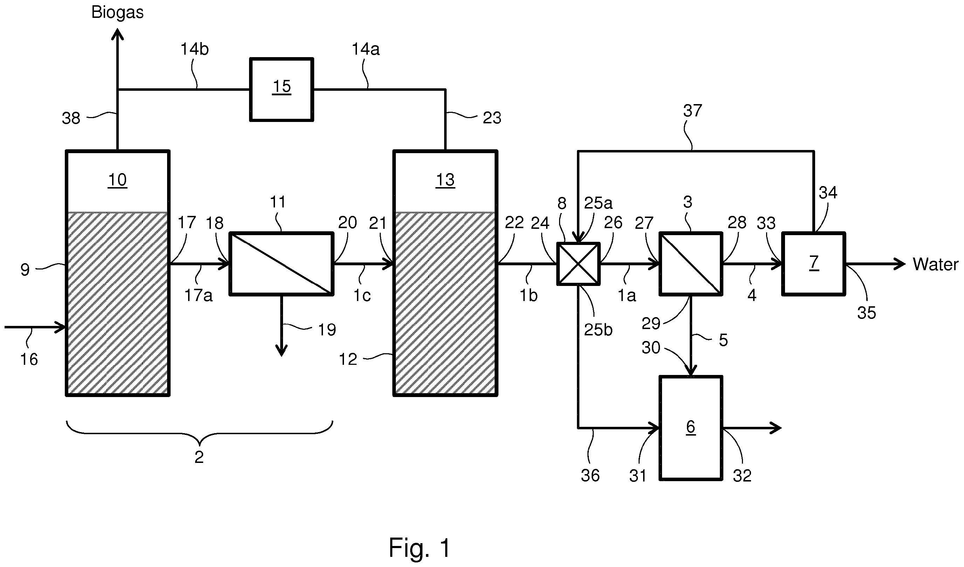

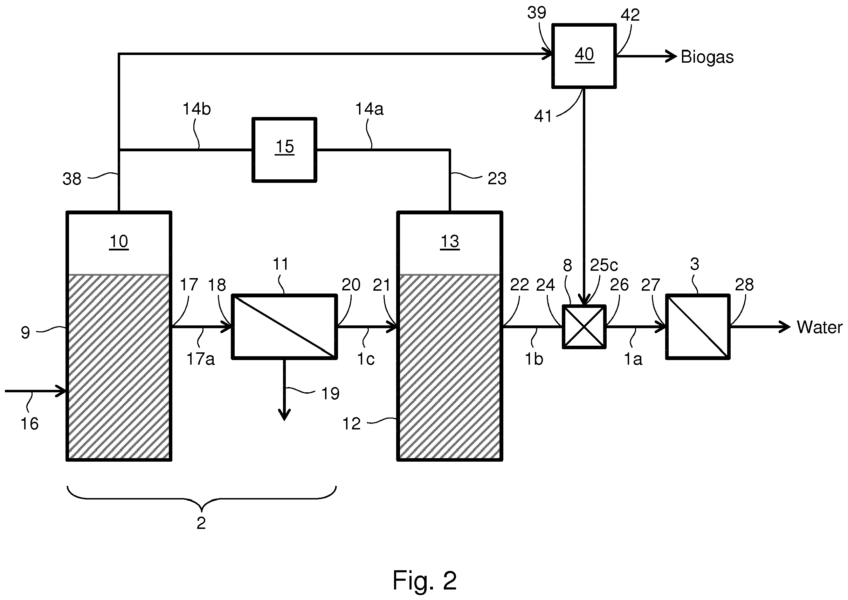

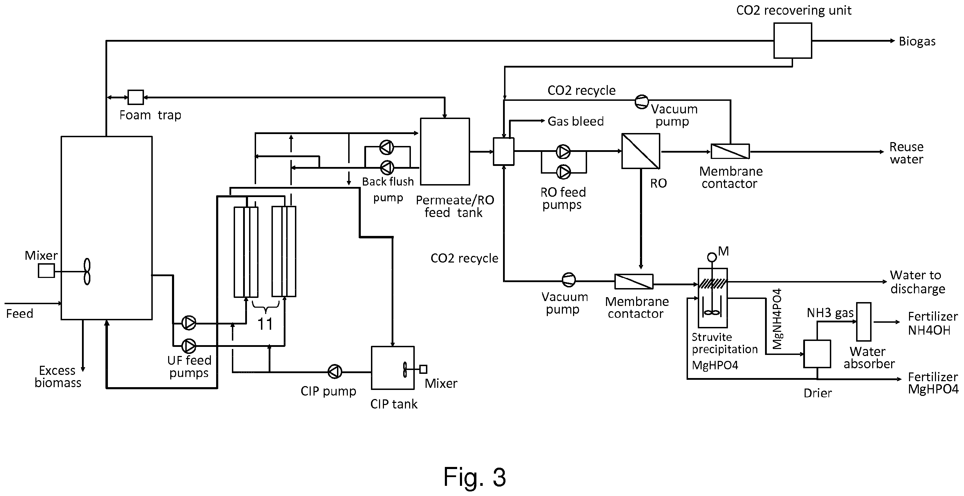

Figures 1-3 schematically exemplify methods and installations according to the invention. It will be understood by the skilled person that the installation may contain further fluid lines (e.g. recycle lines), inlets, outlets treatment units and additional equipment, such as pumps, valves, controllers, sensors *etc,* e.g. as described in the prior art mentioned herein and in handbooks, The skilled person will be able to determine where these are needed or desired based on common general knowledge and the information disclosed herein. As follows from the remainder of the present description and the claims, it is also clear to the skilled person that a number of items shown in the Figures are optional, e.g. the foam trap (15) and the presence of more than one carbon dioxide recovery unit (6, 7, 40). It is also clear to the skilled person that parts from the separate figures may be combined, in particular one or both the carbon dioxide recovery facilities from Figure 1 with the carbon dioxide recovery facility of Figure 2, e.g. as exemplified in Figure 3.

The anaerobic degradation of organic substances is carried out in the digester 9, containing anaerobic microorganisms, at least during use. The digester typically has an inlet for a fluid waste stream 16, an outlet-line for biogas 38 and an outlet for liquid effluent 17.

The outlet for liquid effluent 17 is connected with an inlet 18 of membrane filtration unit 11 via conduit 17a, whereby liquid effluent can be introduced in the filtration unit 11. In the filtration unit a retentate is formed, for which retentate outlet 19 is present, and a filtrate for which filtrate outlet 20 is present. The filtrate from the filtration unit 11 (also referred to as AnMBR filtrate) may partly be recycled to the inlet 18 for the filtration unit or to the digester 9 (not shown). The AnMBR filtrate is conveniently introduced into a filtrate container 13, via line 1c and inlet 21. Typically the filtrate container is a filtrate tank, generally a closed structure (apart from -evidently - designed one or more inlets and outlets for liquids and optionally for gas). From this filtrate container 13, AnMBR filtrate is fed into the direction of the RO unit (3), via filtrate container outlet 22. If part of the filtrate is recycled, this is also conveniently done via the filtrate container 13.

Introduction of carbon dioxide is generally done prior to entering the RO unit 3, and preferably between permeate container 12 and RO or NF unit 3. For this a conventional gas-liquid mixing unit 8 is usually provided of which inlet 24 is connected to filtrate outlet 22 via line 1b. The gas-liquid mixing unit 8 has further one or more carbon dioxide inlets (25a, 25b) and an outlet 26 for filtrate of which the pH has been reduced. Preferably, the mixing unit comprises a pH sensor, or a pH sensor is provided down-stream of the gas-liquid mixing unit 8 and upstream of the RO or NF unit 3. This sensor may be connected to a controlling device for adjusting the carbon dioxide flow relative to the filtrate flow in order to maintain pH of the filtrate entering the RO or NF unit within a desired range. The outlet 26 for filtrate into which carbon dioxide has been introduced is connected to the inlet 27 of RO or NF unit 3 via line 1a.

The RO or NF unit 3 comprises a RO or NF membrane whereby at least a substantial part of the substances other than water in the AnMBR filtrate are retained and through which water passes (plus usually some dissolved gas in particular carbon dioxide). The retained part is a brine, concentrated in salts and - where applicable - residual organics and biomass. The permeate is purified water, which may be used as domestic water or industrial water, optionally after a final treatment, e.g. a pH adjustment to about neutral pH, for which carbon dioxide recovery is a suitable treatment.

The RO or NF unit 3 comprises an outlet 29 for RO or NF concentrate and an outlet 28 for RO or NF permeate. In an embodiment illustrated by Figure 1, at least one of said outlets for RO or NF concentrate and RO or NF permeate respectively are connected to a carbon dioxide recovery unit.

In Figure 1, outlet 29 for RO or NF concentrate is connected to inlet 30 of carbon dioxide recovery unit 6 via line 5. Carbon dioxide recovery unit 6 comprises an outlet 32 for concentrate from which carbon dioxide has been recovered. It further comprises a gas outlet 31. This is connected to inlet 25b of the gas-liquid mixing unit via gas-line 36.

In Figure 1, outlet 28 for RO or NF permeate is connected to inlet 33 of carbon dioxide recovery unit 7 via line 4. Carbon dioxide recovery unit 7 comprises an outlet 35 for water from which carbon dioxide has been recovered. It further comprises a gas outlet 34. This outlet is connected to inlet 25a of the gas-liquid mixing unit via gas-line 37. If both carbon dioxide recovery units 6 and 7 are present, inlet 25a and inlet 25b may be the same inlet.

Figure 1 further illustrates a preferred way to maintain anaerobic conditions during use. The digester 9 and the filtrate container 12 are - at least during use - communicating vessels via a gas conduit 13a, 14b connecting the head space 10 of the digester 9 and the headspace13 of the filtrate container 12. The preferably present foam trap 15 is also shown. As will be understood by the skilled person, the conduit 14b may be connected directly into the digester headspace 10 or via a biogas outlet line 38. A further advantage of providing a gas communicating connection between the headspace of the digester 9 and of the filtrate container 12 resides in the prevention of gas surges during back flush procedures. During a back flush procedure, a (small) volume of biogas is rapidly forced back through the membrane(s) of the membrane filtration unit. This could cause a spike in the biogas flow rate of the head space of the digester and the permeate container are not connected, which could ultimately result in the unwanted flaring of biogas. By the gas conduit (14a, 14b) whereby the digester and filtrate container are communicating vessels any excess liquid volume displaced from the filtrate container 12, during a back flush, will instantaneously be an equal volume of biogas from the digester 9. An alternative solution to this problem is to install a gas holder to capture the biogas surge. However, this is a more complex solution.

In a further embodiment (shown in Figure 2), the installation comprises a gas-treatment unit for recovering carbon dioxide (40) from the biogas produced in the digester (9) and which gas-treatment unit is provided with a conduit between biogas outlet (38) of the digester (9) and the biogas inlet (39) of the gas-treatment unit (40). Said gas-treatment unit (40) further comprises an outlet (41) for biogas from which carbon dioxide has been recovered (and which is thus enriched in methane) and an outlet for recovered carbon dioxide (42). The outlet for recovered carbon dioxide (42) is in connection with an inlet (25c) of the gas-mixing unit 8. Further items of Figure 2 correspond to those having the same number in Figure 1.

Figure 3 shows in more detail a design of an installation according to the invention.

## Claims

1. Method for the treatment of a filtrate (1a-1c) from an anaerobic membrane bioreactor (2), comprising
reducing the pH of the filtrate (1a) from the anaerobic membrane bioreactor and subjecting the filtrate having the reduced pH to a reverse osmosis treatment or a nanofiltration treatment (3), forming a reverse osmosis or nanofiltration permeate (4) and a reverse osmosis or nanofiltration concentrate (5)
whilst keeping the filtrate (1a-1c) from the anaerobic membrane bioreactor (2) essentially anaerobic.

2. Method according to claim 1, wherein the pH is reduced by introducing carbon dioxide into the filtrate.

3. Method according to claim 2, wherein at least part of the carbon dioxide is recovered from the reverse osmosis or nanofiltration permeate (4).

4. Method according to claim 2 or 3, wherein at least part of the carbon dioxide is recovered from the reverse osmosis or nanofiltration concentrate.

5. Method according to claim 2, 3 or 4, wherein at least part of the carbon dioxide is recovered from biogas (38) that has been produced in the anaerobic membrane bioreactor (2).

6. Method according to any of the preceding claims, wherein the pH of the filtrate from the anaerobic membrane reactor to be subjected to reverse osmosis or nanofiltration is reduced to a value of pH 7.0 or less, preferably to a pH in the range of 6.3 to 6.5.

7. Method according to any of the preceding claims, wherein
- the filtrate of the anaerobic membrane bioreactor (2) is formed in a membrane filtration unit (11), in particular an ultrafiltration unit (11), of an anaerobic membrane bioreactor (2) further comprising an anaerobic digester (9) having a digester headspace(10),
- the filtrate (1c) formed in the membrane filtration unit (11) is fed into a filtrate container (12) having a filtrate container headspace (13), from which filtrate container (12) the filtrate from the anaerobic membrane bioreactor (1b, 1a) is fed to a reverse osmosis or nanofiltration unit (3) wherein the reverse osmosis or nanofiltration treatment takes place, whilst maintaining essentially anaerobic conditions; and
wherein the digester (9) and the filtrate container (12) are communicating vessels via a gas conduit (14a, 14b) connecting the digester headspace (10) and the filtrate container headspace (13).

8. Method according to claim 7 wherein the pH of the filtrate is reduced by introducing an acid, in particular by introducing recovered carbon dioxide, to the filtrate from the anaerobic membrane reactor which introduction takes place downstream of the filtrate container (12) and upstream of the reverse osmosis or nanofiltration unit(3).

9. Method according to any of the preceding claims, wherein the filtrate from the anaerobic membrane bioreactor to be subjected to reverse osmosis or nanofiltration contains at least 20 ppm phosphate, in particular about 50 ppm or more phosphate, and ammonia in a molar ratio ammonia to phosphate of more than 1.5, in particular about 2.5 or more.

10. Method according to any of the claims 2-5 or any of the claims 6-9 dependent on any of the claims 2-5, wherein carbon dioxide is recovered from the reverse osmosis or nanofiltration concentrate, whereby a concentrate is obtained having a reduced carbon dioxide content compared to the concentrate directly after reverse osmosis or nanofiltration treatment, wherein the concentrate having the reduced carbon dioxide content is subjected to a salt precipitation, preferably a supersaturation step, and wherein the precipitate, preferably a precipitate comprising ammonia and/or phosphate, is recovered.

11. Method according to any of the claims 2-5, any of the claims 6-9 dependent on any of the claims 2-5, or claim 10,
wherein the reverse osmosis or nanofiltration permeate is treated in a carbon dioxide recovery unit selected from the group consisting of vacuum strippers, gas strippers (such as a stripper making use of nitrogen to strip carbon dioxide from the permeate) and membrane contactors to remove carbon dioxide from the permeate.

12. An installation suitable for carrying out a method according to any of the preceding claims, comprising an anaerobic membrane bioreactor (2), comprising a digester (9) and a membrane filtration unit (11) of which a filtrate outlet is connected to a reverse osmosis or nanofiltration unit (3) via a gas-liquid mixing unit (8) for introducing carbon dioxide into the filtrate, which reverse osmosis or nanofiltration unit has a reverse osmosis or nanofiltration permeate outlet (28) and a reverse osmosis or nanofiltration concentrate outlet(29), and wherein the installation further comprises at least one of the following:
- a carbon dioxide recovery unit (7) for recovering carbon dioxide from said permeate, having an inlet (33) connected to said permeate outlet, which carbon dioxide recovery unit further has an outlet for a liquid (35), in particular water, from which carbon dioxide has been recovered and an outlet (34) for recovered carbon dioxide, which outlet (34) for recovered carbon dioxide is connected to inlet (25a) of the mixing unit (8) to introduce the carbon dioxide into the mixing unit (8));
- a carbon dioxide recovery unit (6) for recovering carbon dioxide from said concentrate, having an inlet (30) connected to said concentrate outlet (29), which carbon dioxide recovery unit (6) further has an concentrate outlet (32) for concentrate from which carbon dioxide has been recovered and an outlet (31) for recovered carbon dioxide, which outlet for recovered carbon dioxide is connected to inlet (25b) of the mixing unit (8) to introduce the carbon dioxide into the mixing unit (8));
- a carbon dioxide recovery unit (40) for recovering carbon dioxide from biogas produced in the digester (9), which carbon dioxide recovery unit (40) has an inlet (39) for introducing the biogas, an outlet (41) for biogas from which carbon dioxide has been recovered and an outlet (42) for recovered carbon dioxide, which outlet (42) for recovered biogas is connected to inlet (25c) of the mixing unit (8) to introduce the carbon dioxide in the mixing unit (8);
which installation is configured to maintain essentially anaerobic conditions in the digester, membrane filtration unit and the reverse osmosis or nanofiltration unit.

13. Installation according to claim 12, comprising a digester (9) having a headspace (10), the digester comprising an inlet (16) for a fluid aqueous stream, a gas-outlet (18), an outlet for liquid effluent (17), which outlet is connected with an inlet (18) of a membrane filtration unit (11) via a conduit (17a), the filtration unit (11) having a retentate outlet (19) and a filtrate outlet (20);
a filtrate container (12) having a headspace (13), the filtrate container comprising an inlet (21) connected with filtrate outlet (20) of the filtration unit (11) via filtrate conduit (1c) and a filtrate outlet (22),
wherein the digester (9) and the filtrate container (12) are - at least during use - communicating vessels via a gas conduit (13a, 14b) connecting the head space (10) of the digester (9) and the headspace(13) of the filtrate container (12).

14. Installation according to claim 13, wherein the gas conduit (14a, 14b) connecting the digester headspace (10) and the filtrate container headspace (13) is provided with a foam trap (15).

15. Installation according to claim 13 or 14, comprising at least one of the following
a supersaturating reactor as a unit (6) for recovering carbon dioxide from a reverse osmosis or nanofiltration concentrate;
an ultrafiltration unit as the membrane filtration unit;
a CSTR as the digester.

16. A process for obtaining purified water and/or nutrients for plants or animals, comprising the treatment of an aqueous waste stream comprising a biodegradable organic substance and inorganic matter in an installation according to any of the claims 12-15 or comprising the treatment of an aqueous waste stream in an anaerobic membrane reactor from which a filtrate is obtained and which filtrate is treated in a method according to any of the claims 1-11.
